# EUROPÄISCHE PATENTSCHRIFT

(11) **EP 2 053 826 B1**
(45) Veröffentlichungstag und Bekanntmachung des Hinweises auf die Patenterteilung: **02.01.2013**
(21) Anmeldenummer: 08014435.5
(22) Anmeldetag: 13.08.2008
(51) Int. Cl.: H04L 29/06, G06K 19/07

(54) **Koordinierte Dual-Interface-Kommunikation**
Coordinated dual interface communication
Communication à double interface coordonnée

(30) Priorität: 25.10.2007 DE 102007051201
(43) Veröffentlichungstag der Anmeldung: 29.04.2009
(73) Patentinhaber: Giesecke & Devrient GmbH, 81677 München (DE)
(72) Erfinder: Köglmeier, Helmut, 81545 München (DE); Baldischweiler, Michael, 81825 München (DE); Grebe, Alexander, 84405 Dorfen (DE); Stocker, Thomas, 81739 München (DE)

(56) Entgegenhaltungen:
- DE-A1-102006 021 087
- FR-A1- 2 897 704
- US-B1- 6 585 166

## Beschreibung

Die vorliegende Erfindung betrifft ein Verfahren zum Koordinieren eines Betriebs zweier unabhängiger Schnittstellen eines portablen Datenträgers sowie einen derartigen Datenträger, insbesondere eine Chipkarte, eine sichere Multimediakarte, eine Modulfunkkarte oder dergleichen.

Aktuelle Entwicklungen im Bereich der portablen Datenträger, wie z.B. Chipkarten und dergleichen, verwenden zu deren flexibleren Einsatz mehrere physikalisch unabhängige Schnittstellen. Insbesondere können portable Datenträger mit einer herkömmlichen kontaktbehafteten Schnittstelle, z.B. einem Kontaktfeld gemäß ISO/IEC 7816, sowie einer zusätzlichen kontaktlosen Schnittstelle ausgestattet sein, z.B. einer Antennenspule für Funkverbindungen. Derartige Datenträger werden auch Dual-Interface-Datenträger genannt. Die eigentliche Datenkommunikation wird dann mittels geeigneter kontaktbehafteter Kommunikationsprotokolle (im Chipkarten- und Mobilfunkbereich z.B. das T=0- oder T=1-Protokoll) mit einer externen Kontakt-Kommunikationsvorrichtung und/oder kontaktloser Kommunikationsprotokolle (z.B. das T=CL-Protokoll gemäß ISO/IEC 1444) mit einer Kontaktlos-Kommunikationsvorrichtung durchgeführt. Als Kontakt-Kommunikationsvorrichtungen kommen beispielsweise herkömmliche Chipkartenterminals, aber auch Telekommunikationsgeräte, Handheld-Computer und dergleichen in Frage, während eine kontaktlose Datenkommunikation mit einem RFID-Lesegerät durchgeführt werden kann, z.B. bei Bezahlvorgänge im öffentlichen Personennahverkehr.

Da die kontaktlose und die kontaktbehaftete Datenkommunikation prinzipiell unabhängig voneinander sind, können Konflikte entstehen, indem während einer bereits laufenden Datenkommunikation über die kontaktlose/kontaktbehaftete Schnittstelle eine konkurrierende Datenkommunikationsanfrage über die jeweils andere Schnittstelle an den Datenträger gerichtet wird. Ein solches Szenario ist bei einer Mobilfunkkarte beispielsweise gegeben, wenn über die kontaktbehaftete Schnittstelle Daten für eine Mobilfunkverbindung ausgetauscht werden und währenddessen über die kontaktlose Schnittstelle konkurrierend eine Bezahltransaktion, z.B. im öffentlichen Personennahverkehr, abgewickelt werden soll. Sowohl die verfügbaren Betriebs- und Steuersysteme für portable Dual-Interface-Datenträger als auch die von den vielfältigen Kommunikationsvorrichtungen derzeit unterstützten Datenkommunikationsmodi lassen zu einem Zeitpunkt jedoch nur eine Datenkommunikation entweder über die kontaktbehaftete oder über die kontaktlose Schnittstelle des Datenträgers exklusiv zu. Dies ist insbesondere dann nachteilig, wenn die einsetzende konkurrierende Datenkommunikation von hoher Priorität ist und zu einem späteren Zeitpunkt nicht wiederholt werden kann.

Bei zeitlichen Konflikten zwischen einer bereits laufenden kontaktlosen Datenkommunikation und einem währenddessen über die kontaktbehaftete Schnittstelle eintreffenden Anfragekommando wird dieses Problem beispielsweise dadurch gelöst, dass ein portabler Datenträger (UICC; "Universal Integrated Circuit Card"), wie z. B. eine Mobilfunkkarte, der kontaktlosen Datenkommunikation einen Vorrang über die kontaktbehaftete Schnittstelle eingeräumt, und die Abarbeitung der kontaktbehafteten Datenkommunikation bis zur Beendigung der kontaktlosen Datenkommunikation verzögert. Da im Chipkarten-/ Mobilfunkbereich eine kontaktlose Datenkommunikation in der Regel innerhalb von 500 ms beendet wird, wird die Abarbeitung einer unmittelbar nach Beginn einer kontaktlosen Datenkommunikation über die kontaktbehaftete Schnittstelle eintreffenden Kommunikationsanfrage um etwa diese Zeitspanne verzögert. Falls es sich bei einer kontaktbehaftet empfangenen Kommunikationsanfrage beispielsweise um eine zeitkritische Authentisierungsanfrage aus einem Mobilfunknetz an eine Mobilfunkkarte handelt, kann durch diese Verzögerung eine vorgegebene maximale Antwortzeit zur Authentisierung überschritten werden, so dass die Mobilfunkkarte aus dem betreffenden Mobilfunknetz ausgeschlossen wird. In der Regel muss ein Mobiltelefon, in das die betreffende Mobilfunkkarte eingesetzt ist, dann aus- und wieder eingeschaltet werden, um eine erneute Einwahl in das Mobilfunknetz vorzunehmen.

Eine denkbare aber technisch aufwändige Lösung dieses Problems ist der Einsatz eines echtzeitfähigen Multitasking-Betriebssystems, um eine gleichzeitige Datenkommunikation über beide Schnittstellen als nebenläufige, quasi-parallele Prozesse zu ermöglichen. Dies ist jedoch aufgrund der begrenzten Ressourcen von portablen Datenträgern nicht realistisch und vielfach für deren normalen Gebrauch auch nicht erforderlich.

US 6585166 B1 schlägt vor, eine zweite Schnittstelle der Karte zu deaktivieren, sobald eine Kommunikation über eine erste Schnittstelle erkannt wird. Gemäß FR 2897704 wird in einer Karte zwischen zwei Schnittstellen umgeschaltet, wenn auf einer ersten Schnittstelle entsprechende Aktivierungsdaten erkannt werden.

Demzufolge ist es die Aufgabe der vorliegenden Erfindung, die Abarbeitung von konkurrierenden Datenkommunikationen über verschiedene Schnittstellen eines portablen Datenträgers derart zu optimieren, dass Konflikte zwischen den Datenkommunikationen minimiert werden.

Diese Aufgabe wird erfindungsgemäß durch ein Verfahren und einen portablen Datenträger mit den Merkmalen der unabhängigen Ansprüche gelöst. Die abhängigen Ansprüche beschreiben vorteilhafte Ausgestaltungen und Weiterbildungen der Erfindung.

Ein portabler Datenträger mit einer ersten und zweiten Schnittstelle, der, während eine erste Datenkommunikation über die erste Schnittstelle bearbeitet wird, Daten einer zweiten Datenkommunikation über die zweite Schnittstelle empfängt, muss entscheiden, welcher der beiden Datenkommunikationen ein Vorrang über die jeweils andere eingeräumt wird. Dazu wird eine Ausführungspriorität für die erste und zweite Datenkommunikation geprüft und die erste Datenkommunikation wird fortgesetzt, falls diese eine höhere Ausführungspriorität besitzt als die zweite Datenkommunikation. Wenn jedoch die zweite Datenkommunikation eine höhere Ausführungspriorität besitzt, wird eine Laufzeitabschätzung vorgenommen, um zu entscheiden, ob die erste Datenkommunikation zunächst fortgesetzt oder gar ordnungsgemäß beendet werden kann, bevor mit der Abarbeitung der zweiten Datenkommunikation begonnen wird, oder ob die erste Datenkommunikation zugunsten der zweiten Datenkommunikation abgebrochen werden muss, um unmittelbar mit der Abarbeitung der zweiten Datenkommunikation zu beginnen.

Eine solche zweistufige Prüfung, umfassend eine Prioritätsprüfung und eine Laufzeitabschätzung, kann beispielsweise von einer Prüfeinrichtung ausgeführt werden, die auf dem portablen Datenträger eingerichtet ist, vorzugsweise als eine von einem Prozessor ausführbare Applikation, Betriebssystemroutine oder dergleichen.

Durch die Prioritätsprüfung wird vorzugsweise in Abhängigkeit von dem Typ und dem Zweck der ersten und zweiten Datenkommunikation und/ oder abhängig von deren jeweiligen Relevanz für den betreffenden Benutzer des portablen Datenträgers individuell ermittelt, ob die erste Datenkommunikation trotz Eintreffen der Daten der zweiten Datenkommunikation fortgesetzt wird, weil die Relevanz der zweiten Datenkommunikation einen Abbruch der ersten Datenkommunikation nicht rechtfertigt, oder ob andernfalls mittels der Laufzeitabschätzung beurteilt werden muss, ob die erste Datenkommunikation (sofort oder gegebenenfalls später) abzubrechen ist, um die Abarbeitung der höherprioritären zweiten Datenkommunikation aufzunehmen.

Die Laufzeitabschätzung wird nur durchgeführt, wenn die zweite Datenkommunikation die höhere Ausführungspriorität besitzt, da nur dann ein Abbruch der ersten Datenkommunikation zugunsten der zweiten Datenkommunikation in Erwägung zu ziehen ist. Durch die Laufzeitabschätzung wird ermittelt, ob die niederprioritäre erste Datenkommunikation unmittelbar abgebrochen werden soll, um die höherprioritäre zweite Datenkommunikation sofort abzuarbeiten, oder ob die niederprioritäre erste Datenkommunikation (zunächst) fortgesetzt werden kann, weil davon ausgegangen werden kann, dass sie mit hoher Wahrscheinlich vollständig beendet werden kann und danach noch genug Zeit verbleibt, auch die höherprioritäre zweite Datenkommunikation vollständig abzuarbeiten. Falls die Laufzeitabschätzung ergibt, dass die erste Datenkommunikation (zunächst) fortgesetzt werden kann, kann ein Abbruch der ersten Datenkommunikation dennoch später erfolgen, sofern sich herausstellt, dass die vollständige Abarbeitung der zweiten Datenkommunikation nach Beendigung der ersten Datenkommunikation gefährdet ist.

Durch diese Priorisierung mittels der Prüfung der jeweiligen Ausführungsprioritäten und der Laufzeitabschätzung wird eine optimale Abarbeitung und Koordination von konkurrierenden Datenkommunikationen durch einen portablen Datenträger mittels in Form einer Prüfeinrichtung einfach zu implementierender Kriterien erreicht, da eine niederprioritäre erste Datenkommunikation nur dann abgebrochen wird, wenn es für die vollständige Abarbeitung einer höherprioritären zweiten Datenkommunikation unbedingt erforderlich ist. Auf diese Weise wird die Anzahl an Abbrüchen von Datenkommunikationen aufgrund von Konflikten zwischen konkurrierenden Datenkommunikationen minimiert.

Bei der Laufzeitabschätzung werden verschiedene zeitliche Maße berücksichtigt, z.B. der Erwartungswert der Restlaufzeit der ersten Datenkommunikation, die beispielsweise aus einer durchschnittlichen Gesamtlaufzeit einer derartigen Datenkommunikation und der bisher verstrichenen Laufzeit der ersten Datenkommunikation abgeleitet wird.

Ferner ist für die Bearbeitung einer Datenkommunikation von Seiten der betreffenden Kommunikationsvorrichtung, mit der der Datenträger kommuniziert, zumeist eine konstante, dem Datenträger bekannte maximale Antwortzeit vorgesehen, innerhalb derer die Kommunikationsvorrichtung im Rahmen der betreffenden Datenkommunikation eine Antwort von dem Datenträger erwartet, damit die Datenkommunikation nicht abgebrochen wird. Diese maximale Antwortzeit der zweiten Datenkommunikation ist bei der Laufzeitabschätzung auch zu berücksichtigen.

Der Erwartungswert der Restlaufzeit der ersten Datenkommunikation und die maximale Antwortzeit der zweiten Datenkommunikation kann abhängig sein von zumindest einem Kommando oder Kommandotyp das/ der im Rahmen der entsprechenden Datenkommunikation von einer Kommunikationsvorrichtung über die betreffende Schnittstelle an den Datenträger gesendet wird. Ferner kann die zu erwartende Restlaufzeit oder die maximale Antwortzeit auch in Abhängigkeit von einer durch die betreffende Datenkommunikation realisierten Anwendung bestimmt werden.

Bei der Laufzeitabschätzung wird durch die Prüfeinrichtung des Datenträgers beurteilt, ob die Restlaufzeit der ersten Datenkommunikation so gering ist (d.h. die erste Datenkommunikation bereits weit fortgeschritten ist), dass sie voraussichtlich so rechtzeitig beendet werden kann, dass auch die zweite Datenkommunikation noch innerhalb ihrer maximalen Antwortzeit vollständig zu bearbeiten ist, oder ob die Restlaufzeit noch so groß ist, dass die erste Datenkommunikation voraussichtlich nicht so rechtzeitig beendet werden kann, dass ein Abbruch der anschließend abzuarbeitenden zweiten Datenkommunikation aufgrund einer Überschreitung der Antwortzeit höchstwahrscheinlich vermieden werden kann. Im erstgenannten Fall wird die erste Datenkommunikation fortgesetzt, während sie im letztgenannten Fall sofort zugunsten einer Abarbeitung der zweiten Datenkommunikation abgebrochen wird.

Da die Laufzeitabschätzung auf Basis von Erwartungswerten vorgenommen wird (z.B. die heuristisch ermittelte mittlere Gesamtlaufzeit oder die erwartete Restlaufzeit der ersten Datenkommunikation), ist es nicht auszuschließen, dass, obwohl die niederprioritäre erste Datenkommunikation zunächst fortgesetzt wurde, sie dennoch nicht so rechtzeitig beendet werden kann, dass auch noch die zweite Datenkommunikation innerhalb der maximalen Antwortzeit vollständig abgearbeitet werden kann. Dies kann beispielsweise durch ungenaue Erwartungswerte oder unerwartete Abweichungen der tatsächlichen Laufzeiten von den entsprechenden Erwartungswerten verursacht werden. Deshalb ist es vorteilhaft, im Falle der Fortsetzung der niederprioritären ersten Datenkommunikation eine Abbruchzeit zu bestimmen, die eine für die weitere Bearbeitung der ersten Datenkommunikation maximal zur Verfügung stehende weitere Laufzeit derart festlegt, dass danach die höherprioritäre zweite Datenkommunikation innerhalb der Antwortzeit in jedem Fall beendet werden kann. Die Abbruchzeit wird also vorzugsweise so bestimmt, dass zwischen einem etwaigen Abbruch der ersten Datenkommunikation und dem Ablauf der maximalen Antwortzeit mindestens die vollständige Bearbeitungszeit der zweiten Datenkommunikation verbleibt.

Das Abbrechen der ersten Datenkommunikation durch die Prüfeinrichtung und/oder die erste Schnittstellensteuerung umfasst nicht die Möglichkeit, die erste Datenkommunikation zu einem späteren Zeitpunkt wieder aufzunehmen, da für den erfindungsgemäßen Datenträger ein ressourcenschonendes Monotasking-Betriebsystem vorgesehen ist und deshalb eine nebenläufige Ausführung von Datenkommunikations-Bearbeitungsprozessen, die ein Unterbrechen und Fortsetzen ermöglichen würde, nicht möglich ist. Ein Datenaustausch ist somit zeitgleich auf beiden Schnittstellen möglich, eine zeitgleiche Bearbeitung der ausgetauschten Daten jedoch nicht.

Falls die erste Datenkommunikation die höhere Ausführungspriorität besitzt, wird eine Laufzeitabschätzung nicht durchgeführt. Die Prüfeinrichtung signalisiert der zweiten Schnittstellensteuerung stattdessen direkt, dass die Abarbeitung der (niederprioritären) zweiten Datenkommunikation bis zum vollständigen Abschluss der (höherprioritären) ersten Datenkommunikation verzögert werden soll.

Als erste und zweite Schnittstellen mit den entsprechenden Schnittstellensteuerungen können prinzipiell beliebige, physikalisch unabhängige Schnittstellen in einem portablen Datenträger vorgesehen sein. Vorzugsweise umfasst ein erfindungsgemäßer Datenträger jedoch eine kontaktlose Schnittstelle und eine kontaktbehaftete Schnittstelle, über die konkurrierende kontaktlose und kontaktbehaftete Datenkommunikationen bearbeiten werden können. Als kontaktbehaftete und kontaktlose Kommunikationsprotokolle können prinzipiell sämtliche geeignete Kommunikationsprotokolle eingesetzt werden. Insbesondere wird als kontaktbehaftetes Kommunikationsprotokoll das T=0- oder das T=1-Kommunikationsprotokoll bevorzugt, während als kontaktloses Kommunikationsprotokoll das T=CL- oder das SWP-Kommunikationsprotokoll ("Single Wire Protocol") verwendet werden.

Bei Verwendung eines kontaktbehafteten T=0-Kommunikationsprotokolls kann eine Beantwortung von (im Rahmen der oben genannten zweiten Datenkommunikation) kontaktbehaftet empfangenen Anfragekommandodaten bei bedarf dadurch verzögert werden, dass so lange Null-Bytes von der entsprechenden Kontakt-Schnittstellensteuerung an die betreffende Kontakt-Kommunikationsvorrichtung gesendet werden, bis die Bearbeitung der konkurrierenden kontaktlosen (ersten) Datenkommunikation abgeschlossen ist. Bei Verwendung des T=1-Kommunikationsprotokolls werden zu demselben Zweck Wartezeitverlängerungsanfragen (WTX; "Waiting Time Extension") an die Kontakt-Kommunikationsvorrichtung gesendet.

Im Rahmen der oben genannten gängigen Kommunikationsprotokolle besteht eine Datenkommunikation in der Regel aus einem an dem Datenträger über die betreffende Schnittstelle gerichteten Anfragekommando und einem beantwortenden Antwortkommando. Bei Empfang eines die Datenkommunikation beginnenden Anfragekommandos gehen über die betreffende - beispielsweise kontaktbehaftete - Schnittstelle zunächst Kopfdaten des Anfragekommandos ein, die zumindest Informationen über Art und Typ des Kommandos umfassen.

Vorzugsweise wird die Prioritätsprüfung von der Prüfeinrichtung bereits bei Eintreffen der Kopfdaten eines Anfragekommandos an der zweiten Schnittstelle durch eine betriebssystem- oder hardwaregesteuerte Unterbrechung ("Interrupt") der ersten Datenkommunikation eingeleitet. Eine entsprechende auf einem Prozessor des Datenträgers ausführbare Unterbrechungsroutine (ISR; "Interrupt Service Routine") liest dann die Kopfdaten des im Rahmend der zweiten Datenkommunikation empfangenen Anfragekommandos und prüft, ob ein besonders wichtiges Anfragekommando vorliegt, z.B. eine Authentisierungsanfrage der einer Kontakt-Kommunikationsvorrichtung in einem Mobilfunknetz im Rahmen der Einwahl in das Mobilfunknetz. Falls anhand der Kopfdaten eine derartige Authentisierungsanfrage (oder ein anderes höherprioritäres Anfragekommando) festgestellt wird, werden auch die Nutzdaten des Anfragekommandos bei der zweiten Kommunikationsvorrichtung angefordert, die gemeinsam mit den Kopfdaten das vollständige Anfragekommando bilden. Das Anfordern der Nutzdaten kann dabei parallel zur Bearbeitung der ersten Datenkommunikation erfolgen, ohne dass diese angehalten, unterbrochen oder beendet werden muss. Dies ermöglicht eine teilweise Parallelisierung der ersten und zweiten Datenkommunikation. Erst bei vollständigem Vorliegen der Nutzdaten wird dann eine Prüfung der Ausführungspriorität vorgenommen, so dass auch die Zeitdauer des Anforderns der Nutzdaten zur Bearbeitung der ersten Datenkommunikation genutzt werden kann.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine schematische Darstellung einer Dual-Interface-Chipkarte mit einer kontaktbehafteten und einer kontaktlosen Schnittstelle; und
- Figur 2: ein Ablaufdiagramm des erfindungsgemäßen Verfahrens.

Im Rahmen der vorliegenden Erfindung werden lediglich diejenigen technischen Merkmale von Chipkarten, Kommunikationsprotokollen und Datenformaten erläutert, die zum Verständnis der Erfindung unmittelbar notwendig sind. Detaillierte und ergänzende technische Zusammenhänge werden im "Handbuch der Chip-Karten, 4. Auflage" von W. Rankl und W. Effing beschrieben.

Nachfolgend wird eine bevorzugte Ausführungsform der Erfindung beschrieben, bei dem eine Mobilfunkkarte, während sie eine kontaktlose Datenkommunikation über eine kontaktlose Schnittstelle bearbeitet, ein eine kontaktbehaftete Datenkommunikation beginnendes Anfragekommando über eine kontaktbehaftete Schnittstelle empfängt. Im Hinblick auf die obige allgemeine Beschreibung der Erfindung repräsentiert die kontaktlose Datenkommunikation also eine erste Datenkommunikation und das kontaktbehaftete empfangene Anfragekommando repräsentiert Daten einer konkurrierenden zweiten Datenkommunikation. Selbstverständlich ist die nachfolgend beschriebene Ausführungsform nicht als Einschränkung der Erfindung zu verstehen, sondern lediglich als deren konkrete beispielhafte Erläuterung. Die Erfindung umfasst vielmehr die entsprechende Koordination zweier beliebiger konkurrierender Datenkommunikationen des Datenträgers über beliebige physikalisch oder logisch getrennte Schnittstellen mit entsprechenden Kommunikationsvorrichtungen. Ein Datenträger mit nur einer physikalischen Schnittstelle kann mehrere logische Schnittstellen abbilden, z.B. ein USB-Token, der über eine ICCD-Klasse Chipkarten-APDUs verarbeitet und über eine andere Klasse z.B. TCP/IP oder Mass Storage unterstützt.

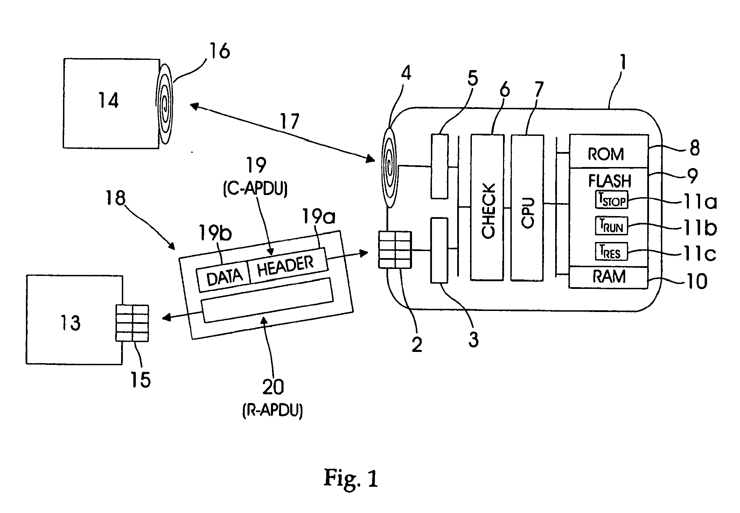

Figur 1 zeigt schematisch einen als Mobilfunkkarte 1 ausgebildeten portablen Datenträger mit einem Prozessor 7 (CPU) und einer dreistufigen Speicheranordnung, bestehend aus einem permanenten ROM-Speicher 8, in dem das Betriebssystem (nicht dargestellt) der Mobilfunkkarte 1 liegt, einem wieder beschreibbaren EEPROM- oder Flash-Speicher 9 und einem flüchtigen RAM-Arbeitsspeicher 10. Die Mobilfunkkarte 1 umfasst des Weiteren eine kontaktbehaftete Schnittstelle 2 mit einer Kontakt-Schnittstellensteuerung 3, wobei die Schnittstelle 2 ein herkömmliches 6- oder 8-feldriges Kontaktfeld nach ISO 7816 umfasst. Ferner umfasst die Mobilfunkkarte 1 eine kontaktlose Schnittstelle 4 mit einer entsprechenden Kontaktlos-Schnittstellensteuerung 5, wobei die Schnittstelle 4 als Antenne oder dergleichen eingerichtet sein kann.

Die kontaktlose Daten- und Energieübertragung zu/von der Mobilfunkkarte 1 kann auf vielfältige Weise realisiert werden, insbesondere als herkömmliche Funk- oder RFID-Verbindung. Die Schnittstellensteuerungen 3, 5 steuern den Betrieb der zugehörigen Schnittstellen 2, 4 nach vorgegebenen standardisierten Kommunikationsprotokollen. So kann die kontaktbehaftete Schnittstelle 2 beispielsweise gemäß der im Chipkarten- und Mobilfunkbereich üblichen Kommunikationsprotokolle T=0 oder T=1 betrieben werden, während die kontaktlose Schnittstelle 4 z.B. gemäß dem T=CL-Protokoll oder den Single-Wire-Protocol (SWP) betrieben wird. Die beiden Schnittstellensteuerungen 3, 5 arbeiten prinzipiell unabhängig voneinander und bearbeiten lediglich diejenige Datenkommunikation 17,18, die über die betreffende Schnittstelle 2, 4 abgewickelt wird.

Den beiden Schnittstellensteuerungen 3, 5 nachgeschaltet ist eine Prüfeinrichtung 6, die bei Empfang eines Anfragekommandos 19 von einer Kontakt-Kommunikationsvorrichtung 13, z.B. einem Mobilfunktelefon, in das die Mobilfunkkarte 1 eingesetzt ist, während eine kontaktlose Datenkommunikation 17 zwischen einer kontaktlosen Schnittstelle 16 einer Kontaktlos-Kommunikationsvorrichtung 14 und der Schnittstelle 4 der Mobilfunkkarte 1 bereits durch die Kontaktlos-Schnittstellensteuerung 5 bearbeitet wird, eine Entscheidung trifft, welche der beiden konkurrierenden Datenkommunikationen 17,18 bevorzugt zu behandeln ist.

Sowohl die Schnittstellensteuerungen 3, 5 der Schnittstellen 2, 4 als auch die Prüfeinrichtung 6 können als Hardware-Elemente der Mobilfunkkarte 1 oder als Software-Komponenten ausgestaltet sein, die entweder als Applikationen im Flash-Speicher 9 oder als Betriebssystembestandteile im ROM-Speicher 8 abgelegt sind. Bei ihrer Ausführung durch den Prozessor 7 der Mobilfunkkarte 1 werden dann entsprechende Prozesse gebildet und abgearbeitet. Die Ausführung derartiger und anderer Prozesse, die z.B. die kontaktbehaftete und kontaktlose Datenkommunikation betreffen, wird von einem Betriebssystem (nicht dargestellt) der Mobilfunkkarte 1 gesteuert. Üblicherweise ist das Betriebsystem von Mobilfunkkarten und vergleichbaren portablen Datenträgern ein Monotasking-System, das keine nebenläufige, d.h. quasiparallel Prozessabarbeitung erlaubt.

Bei der Mobilfunkkarte 1 kann es sich prinzipiell um eine beliebige (U)SIM-Mobilfunkkarte oder eine andere mit einem Prozessor ausgestattete Chipkarte handeln, z.B. um eine Smart-Card, eine sichere Multimediakarte oder dergleichen. Beispielsweise kommuniziert die Mobilfunkkarte 1 über die kontaktbehaftete Schnittstelle 2 mit einem Mobiltelefon, in welches die Mobilfunkkarte 1 eingesetzt ist, während über die kontaktlose Schnittstelle 4 eine kontaktlose Datenkommunikation mit einer externen Funkkommunikationseinheit durchgeführt werden kann, z.B. mit einem entsprechend ausgerüsteten Verkaufsterminal, RFID-Lesegerät oder dergleichen. So werden im Falle einer kontaktbehafteten Kommunikation 18 Kommunikationsdaten 19, 20 zwischen der kontaktbehafteten Schnittstelle 2 der Mobilfunkkarte 1 und einer entsprechenden kontaktbehafteten Schnittstelle 14 einer externen Kontakt-Kommunikationsvorrichtung 13 ausgetauscht. Ebenso werden bei einer kontaktlosen Datenkommunikation 17 Kommunikationsdaten zwischen der kontaktlosen Schnittstelle 4 und einer entsprechenden kontaktlosen Schnittstelle 15 der Kontaktlos-Kommunikationsvorrichtung 14, z.B. einer Funkkommunikationseinheit, ausgetauscht.

Eine kontaktbehaftete Datenkommunikation 18 der Mobilfunkkarte 1 wird bei Verwendung des T=0- oder T=1-Protokolls im Master/Slave-Betrieb mit der Kontakt-Kommunikationsvorrichtung 13, z.B. einem Mobilfunkgerät, als aktivem Kommunikationspartner (Master) und der Mobilfunkkarte 1 als reaktivem Kommunikationspartner (Slave) durchgeführt, der lediglich auf die Anfragekommandos der Kontakt-Kommunikationsvorrichtung 13 mit Antwortkommandos reagieren kann. Deshalb kann im Weiteren davon ausgegangen werden, dass eine kontaktbehaftete Datenkommunikation 18 genau ein Anfragekommando 19 der Kontakt-Kommunikationsvorrichtung 13 an die Mobilfunkkarte 1 und ein anschließendes Antwortkommando 20 der Mobilfunkkarte 1 an die Kontakt-Kommunikationsvorrichtung 13 umfasst.

Anfrage- und Antwortkommandos sind hierbei vorzugsweise protokollunabhängig nach ISO 7816 aufgebaut. Das Anfragekommando 19 ist vorzugsweise als Kommando-APDU (C-APDU) und das Antwortkommando 20 als Antwort-APDU (R-APDU) aufgebaut. Sowohl die C-APDU 19 als auch die R-APDU 20 entsprechen einem standardisierten Datenformat und umfassen sowohl die eigentlichen Nutzdaten des jeweiligen Kommandos als auch ergänzende Steuer- und Verwaltungsdaten. Deshalb besteht eine C-APDU 19 aus führenden Kopfdaten 19a ("Header"), die beispielsweise den Kommandotyp angeben, und nachfolgenden Nutzdaten 19b, wobei nicht notwendigerweise jedes Anfragekommando Nutzdaten umfasst. Bei der Übertragung eines Anfragekommandos 19 von der Kontakt-Kommunikationsvorrichtung 13 an die kontaktbehaftete Schnittstelle 2 werden zunächst die Kopfdaten 19a übertragen und von der Kontakt-Schnittstellensteuerung 3 ausgewertet und abschließend werden die Nutzdaten 19b angefordert und übertragen.

Die Prüfeinrichtung 6 ist eingerichtet, insbesondere in demjenigen Fall, in dem während einer bereits laufenden Bearbeitung einer kontaktlosen Datenkommunikation 17 ein Anfragekommando 19 (C-APDU) über die kontaktbehaftete Schnittstelle 2 von der Kontakt-Schnittstellensteuerung 3 empfangen wird, eine optimale sequentielle Abarbeitung der kontaktlosen und kontaktbehafteten Datenkommunikation 17,18 sicherzustellen. Dabei wird insbesondere die Tatsache berücksichtigt, dass eine Mobilfunkkarte 1 innerhalb einer bestimmten Antwortzeit (z. B. T_{RES} = 300 ms) auf ein kontaktbehaftetes Anfragekommandos 19 (C-APDU) mit einem entsprechenden Antwortkommando 20 (R-APDU) antworten muss, um einen Abbruch der Datenkommunikation seitens der kontaktbehafteten Kommunikationsvorrichtung zu vermeiden, obwohl die ausführenden Komponenten, z. B. der Prozessor 7, mit der Bearbeitung der kontaktlosen Datenkommunikation 17 beschäftigt sind - beispielsweise mit einer RFID-Kommunikation über das SWP-Kommunikationsprotokoll, die eine Gesamtlaufzeit haben kann, die die Antwortzeit T_{RES} überschreitet, z. B. 500 ms.

Dazu nimmt die Prüfeinrichtung 6 eine Signifikanz-/Relevanzprüfung vor, indem für die kontaktlose Datenkommunikation 17 und das kontaktbehaftet empfangene Anfragekommando 19 jeweils einer Ausführungspriorität bestimmt wird, die beispielsweise auf einer Wiederholbarkeit der betreffenden Datenkommunikation oder einer sonstigen Relevanz bzw. Signifikanz der Datenkommunikation beruht. Sofern sich dabei ergibt, dass das kontaktbehaftet empfangene Anfragekommando 19 die höhere Priorität besitzt und deshalb ein Abbruch der kontaktlosen Datenkommunikation 17 zugunsten einer Abarbeitung der kontaktbehafteten Datenkommunikation 18 zu erwägen ist, wird eine Laufzeitabschätzung vorgenommen, die heuristische Erwartungswerte insbesondere für die Restlaufzeit T_{REST} und die Gesamtbearbeitungszeit T_{MEAN} der ersten Datenkommunikation 17 und die maximale Antwortzeit T_{RES} der zweiten Datenkommunikation 18 berücksichtigt. Dies erlaubt eine fundierte Entscheidung darüber, ob und gegebenenfalls wie lange die niederprioritäre kontaktlose Datenkommunikation 17 fortgesetzt werden kann, bevor sie zugunsten der konkurrierenden, höherprioritären kontaktbehafteten Datenkommunikationen 18 abgebrochen wird.

Mit dieser Strategie wird insbesondere die Situation behandelt, in der während einer laufenden kontaktlosen Datenkommunikation 17 ein hochprioritäres Authentisierungsanfragekommando 19 (oder ein anderes hochprioritäres Anfragekommando) kontaktbehaftet empfangen wird, das zumindest eine höhere Ausführungspriorität als die bearbeitete kontaktlose Datenkommunikation 17 hat. Abhängig von der Laufzeitabschätzung kann es sinnvoll sein, die niederprioritäre kontaktlose Datenkommunikation 17 nicht sofort abzubrechen, sondern solange fortzusetzen, wie eine ordnungsgemäße und vollständige Abarbeitung der höherprioritären Datenkommunikation 18 innerhalb der entsprechenden maximalen Antwortzeit T_{RES} möglich bleibt und somit ein Ausschluss der Mobilfunkkarte 1 aus dem entsprechenden Betreibernetz und eine erneute Anmeldung, z.B. durch Aus- und wieder Einschalten des Mobilfunktelefons, vermieden werden kann.

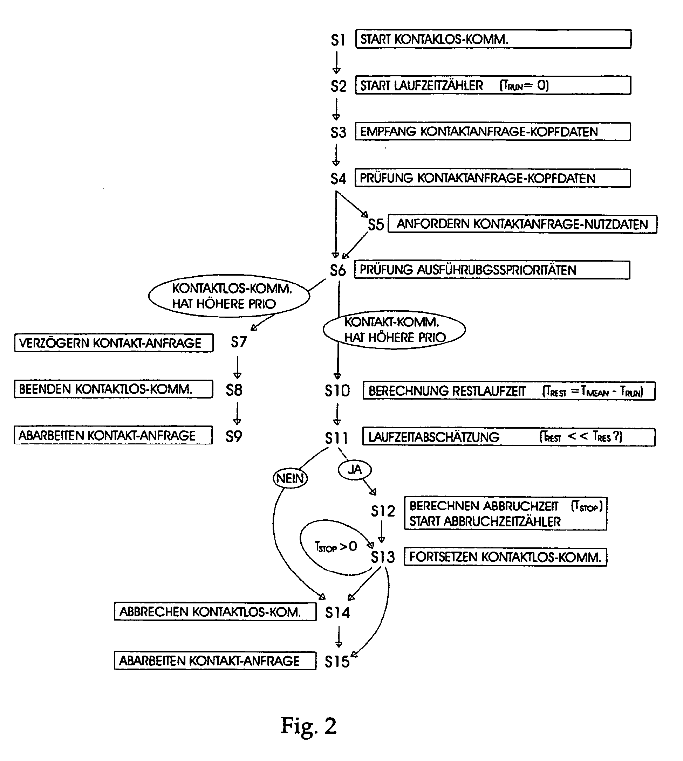

Figur 2 zeigt schematisch die durch die Prüfeinrichtung 6 der Mobilfunkkarte 1 koordinierte Bearbeitung einer kontaktlosen Datenkommunikation 17 über die kontaktlose Schnittstelle 4 und einer kontaktlosen Datenkommunikation 18 über die kontaktbehaftete Schnittstelle 2.

Nach dem Start der kontaktlosen Datenkommunikation 17 zwischen der Kontaktlos-Kommunikationsvorrichtung 14 und der Mobilfunkkarte 1 in Schritt S1 startet die Prüfeinrichtung 6 in Schritt S2 den Laufzeitzeitzähler 11b, der die Laufzeit T_{RUN} der kontaktlosen Datenkommunikation 17 durch die Mobilfunkkarte 1 erfasst. Der Laufzeitzeitzähler 12 kann beispielsweise von einem internen Zeitgeber der Mobilfunkkarte 1 abgeleitet werden oder aus dem "Timetick" des SWP-Protokolls, sofern dieses für die kontaktlose Datenkommunikation 17 von der Kontaktlos-Schnittstellensteuerung 5 unterstützt wird.

Während der Bearbeitung der kontaktlosen Datenkommunikation 17 empfängt die Mobilfunkkarte 1 über die kontaktbehaftete Schnittstelle 2 die in Schritt S3 Kopfdaten 19a eines Anfragekommandos 19 (C-APDU). Dies gilt insbesondere bei Verwendung des kontaktbehafteten T=0-Protokolls, bei dem von einem Anfragekommando 19, das an der kontaktbehafteten Schnittstelle 2 eintrifft, gewöhnlich nur die 5 Byte der Kopfdaten 19a empfangen werden, nicht aber die Nutzdaten 19b des Anfragekommandos 19, sofern das Anfragekommando 19 Nutzdaten 19b umfasst.

Bei Empfang der Kopfdaten 19a wird betriebssystem- oder hardwaregesteuert eine Unterbrechung ("Interrupt") ausgelöst. Eine entsprechende Unterbrechungsroutine (ISR; "Interrupt Sevice Routine") behandelt diese Unterbrechung, um das zeitkritische Ereignis kontrolliert zu bearbeiten. Dabei wird anhand der empfangenen Kopfdaten 19a in Schritt S5 geprüft, ob es sich bei dem Anfragekommando 19 um ein Authentisierungsanfragekommando von einem Netzbetreiber zum Aufbau einer Mobilfunkverbindung handelt. Falls dies der Fall ist, werden die Nutzdaten 19b des Authentisierungsanfragekommandos 19 unmittelbar bei der Kontakt-Kommunikationsvorrichtung 13 angefordert und über die kontaktbehaftete Schnittstelle 2 nachgeladen, während die kontaktlose Datenkommunikation 17 über die davon nicht beeinträchtigte Kontaktlos-Schnittstellensteuerung 4 weiter bearbeitet wird. Die zum Empfang der Kopfdaten 19a verwendete Unterbrechungsroutine sorgt also dafür, dass die Nutzdaten 19b des Authentisierungsanfragekommandos 19 ohne nennenswerte CPU-Auslastung parallel zur Bearbeitung der kontaktlosen Datenkommunikation 17 und insofern mit minimalem Zeitverlust empfangen werden können. Sofern die Bearbeitung der kontaktlosen Datenkommunikation 17 bei Empfang der Kopfdaten 19a bereits weit fortgeschritten war, wird die Bearbeitung der kontaktlosen Datenkommunikation 17 unter Umständen bereits während des Nachladens der Nutzdaten 19b abgeschlossen. In diesem Fall kann die Prüfeinrichtung 6 das nunmehr vollständig empfangene Authentisierungsanfragekommando 19 sofort abarbeiten und durch ein entsprechendes Antwortkommando 20 ohne Zeitverzögerung beantworten.

Falls nach dem Nachladen der Nutzdaten 19b die kontaktlose Datenkommunikation 17 noch nicht beendet ist, prüft die Prüfeinrichtung 6 in Schritt S6, ob das kontaktbehaftet empfangene Anfragekommando 19 eine höhere Ausführungspriorität als die bearbeitete kontaktlose Kommunikation 17 besitzt.

Falls dies nicht der Fall ist, d.h. falls die Bearbeitung der kontaktlosen Datenkommunikation 17 wichtiger ist und eine höhere Priorität besitzt als die Abarbeitung des kontaktbehaftet empfangenen Anfragekommandos 19, wird die Abarbeitung des Anfragekommandos 19 in Schritt S7 so lange verzögert, bis die Bearbeitung der kontaktlosen Datenkommunikation 17 in Schritt S8 vollständig abgeschlossen wird und anschließend mit der Abarbeitung des Anfragekommandos 19 in Schritt S9 begonnen werden kann. Hierbei ist eine Laufzeitabschätzung nicht notwendig, da die kontaktlose Datenkommunikation 17 aufgrund ihrer höheren Priorität laufzeitunabhängig vollständig beendet wird, bevor die kontaktbehaftete Datenkommunikation 18 abgearbeitet wird.

Sofern in Schritt S6 ermittelt wird, dass das kontaktbehaftet empfangene Anfragekommando 19 eine höhere Ausführungspriorität als die bearbeitete kontaktlose Datenkommunikation 17 besitzt, wird in den Schritten S10 und S11 geprüft, ob ein Abbrechen der kontaktlosen Datenkommunikation 17 zu Gunsten einer vorzeitigen Abarbeitung des Anfragekommandos 19 aufgrund von zu erwartenden Laufzeiten der beiden Datenkommunikationen 17,18 sinnvoll ist.

Dazu wird in Schritt S10 zunächst die erwartete Restlaufzeit T_{REST} der kontaktlosen Datenkommunikation ermittelt, z.B. als Differenz zwischen der heuristisch ermittelten durchschnittlichen Gesamtlaufzeit T_{MEAN} derartiger kontakloser Datenkommunikationen und der bisher verstrichenen Laufzeit T_{RUN} der kontaktlosen Datenkommunikation (T_{REST} = T_{MEAN} - T_{RUN}).

Anschließend wird in Schritt S11 die Laufzeitabschätzung vorgenommen. Dabei wird geprüft, ob die kontaktlose Datenkommunikation 17 bereits so weit fortgeschritten ist (bzw. deren verbleibende Restlaufzeit T_{REST} so gering ist), dass im Anschluss an die vollständige Beendigung der ersten Datenkommunikation 17 wahrscheinlich auch noch die zweite Datenkommunikation 18 innerhalb der Antwortzeit T_{RES} vollständig abgearbeitet werden kann (T_{REST} << T_{RES}). Die Antwortzeit T_{RES} liegt dem Datenträger 1 hierbei in seinem Flash-Speicher 9 als Antwortzeitdatum 11c vor.

Falls die Prioritätsprüfung des Schrittes S6 ergibt, dass eine hochprioritäre Datenkommunikation 18, z. B. eine Authentisierung gegenüber einem Mobilfunknetz, unmittelbar bevorsteht, wird in Schritt S11 geprüft, ob die kontaktlose Datenkommunikation 17 eine so geringe erwartete Restlaufzeit T_{REST} hat, dass die Abarbeitung der Authentisierung ohne Nachteile um diese Restlaufzeit T_{REST} verzögert werden kann. Dann kann nämlich die niederprioritäre kontaktlose Datenkommunikation 17 noch abgeschlossen werden, da aufgrund der geringen Restlaufzeit T_{REST} die Abarbeitung des kontaktbehaftet empfangenen Anfragekommandos 19 voraussichtlich ohne Abbruch der Mobilfunkverbindung seitens der Kontakt-Kommunikationsvorrichtung 13 vollständig abgearbeitet werden kann.

Da die Laufzeitabschätzung in Schritt S11 jedoch auf Heuristiken und Erwartungswerten basiert, kann nicht absolut sichergestellt werden, dass die erste Datenkommunikation 17 auch wirklich innerhalb der erwarten Restlaufzeit T_{REST} beendet wird. Deshalb wird in Schritt S12 eine Abbruchzeit T_{STOP} berechnet und ein entsprechender Abbruchzeitzähler 11a in dem Flash-Speicher 9 eingerichtet. Die Abbruchzeit T_{STOP} gibt die maximal mögliche weitere Laufzeit der niederprioritären kontaktlosen Datenkommunikation an, damit die höherprioritäre kontaktbehaftete Datenkommunikation sicher innerhalb der Antwortzeit T_{RES} beendet werden kann. In Schritt S13 wird die kontaktlose Datenkommunikation 17 dann so lange fortgesetzt, bis sie entweder vollständig beendet ist oder der Abbruchzeitzähler abgelaufen ist. Im letztgenannten Fall, wird die erste Datenkommunikation in Schritt S14 abgebrochen, damit in Schritt S15 die Abarbeitung des kontaktbehaftet empfangenen Anfragekommandos begonnen werden kann. Falls die erste Datenkommunikation vor Ablauf des Abbruchzeitzählers beendet werden kann, wird unmittelbar die Abarbeitung der zweiten Datenkommunikation in Schritt S15 aufgenommen.

Wird in Schritt S11 festgestellt, dass Restlaufzeit T_{REST} der ersten Datenkommunikation 17 so groß ist, dass die zweite Datenkommunikation 18 nach vollständiger Beendigung der ersten Datenkommunikation 17 nicht mehr innerhalb der Antwortzeit T_{RES} abgearbeitet werden kann, wird die kontaktlose Datenkommunikation 17 in Schritt S14 sofort abgebrochen, weil keine Aussicht besteht, die höherprioritäre kontaktbehaftete Datenkommunikation 18 sequentiell nach der niederprioritären kontaktlosen Datenkommunikation 17 abzuarbeiten, ohne die Antwortzeit T_{RES} zu überschreiten. Anschließend wird in Schritt S15 die Abarbeitung des kontaktbehaftet empfangenen Anfragekommandos 19 begonnen.

Die in Schritt S14 abgebrochene kontaktlose Datenkommunikation 17 kann später nicht mehr fortgesetzt werden, da das Betriebssystem (nicht dargestellt) der Mobilfunkkarte 1 kein Multitasking-System sondern ein Monotasking-Betriebssystem ist, das einen Wechsel nebenläufiger Prozesse und insofern die Fortsetzung unterbrochener Prozesse nicht unterstützt.

Die technische Realisierung der Verzögerung der Abarbeitung des Anfragekommandos 19 in Schritt S7 oder gegebenenfalls während des Ablaufs des Abbruchzeitzählers 11a in Schritt S13 ist abhängig von dem jeweils verwendeten kontaktbehafteten Kommunikationsprotokoll. Prinzipiell sendet hierbei die Kontakt-Schnittstellensteuerung 3 kurz vor Ablauf der für die Abarbeitung des kontaktbehafteten Anfragekommandos 19 maximal zur Verfügung stehenden Wartezeit ein Verlängerungssignal an die Kontakt-Kommunikationsvorrichtung 13. Zur Verlängerung der Wartezeit kann die Kontakt-Schnittstellensteuerung 3 ein WTX-Signal ("Waiting Time Extension") an die Kontakt-Kommunikationsvorrichtung 13 senden, welche daraufhin der Mobilfunkkarte 1 zu Abarbeitung des Anfragekommandos 19 weitere Zeit einräumt. Dadurch wird ein Abbruch der kontaktbehafteten Datenkommunikation 18 durch die Kontakt-Kommunikationsvorrichtung 13 aufgrund eines Zeitablaufs ("Timeout") vermieden. Analog dazu werden bei dem T=0-Protokoll Null-Bytes gesendet, die dem gleichen Zweck dienen, wie die WTX-Signale.

Obwohl in der vorliegenden Anmeldung lediglich der Fall beschrieben wird, dass während einer kontaktlosen Datenkommunikation 17 ein Anfragekommando 19 kontaktbehaftet empfangen wird, ist die offenbarte Technik und die beschriebenen Mechanismen prinzipiell auch für den umgekehrten Fall einsetzbar, nämlich für denjenigen, dass während einer kontaktbehafteten Datenkommunikation ein Anfragekommando über die Kontaktlos-Schnittstelle empfangen wird. Ebenso sind die beschriebenen Mechanismen prinzipiell für sämtliche Dual-Interface-Chipkarten gleichermaßen wirksam einsetzbar, nicht nur für Dual-Interface-Mobilfunkkarten.

## Patentansprüche

1. Verfahren in einem portablen Datenträger (1) mit einer ersten Schnittstelle (4) und einer zweiten Schnittstelle (2), umfassend die Schritte:
- Bearbeiten (S1) einer ersten Datenkommunikation (17), die über die erste Schnittstelle (4) erfolgt;
- Empfangen (S3) von Daten einer zweiten Datenkommunikation (18) über die zweite Schnittstelle (2), wobei der Schritt des Empfangens (S3) von Daten der zweiten Datenkommunikation (18) gleichzeitig mit dem Schritt des Bearbeitens (S1) der ersten Datenkommunikation (17) erfolgt;
- Prüfen (S6) einer Ausführungspriorität für die erste und zweite Datenkommunikation (17,18), wobei die Bearbeitung der ersten Datenkommunikation (17) fortgesetzt wird (S8), falls die erste Datenkommunikation (17) die höhere Ausführungspriorität hat;
wobei eine Laufzeitabschätzung (S11) durchgeführt wird, falls die zweite Datenkommunikation (18) die höhere Ausführungspriorität besitzt, und abhängig von der Laufzeitabschätzung (S10) entweder
- das Bearbeiten der ersten Datenkommunikation (17) fortgesetzt wird (S13), bevor die zweite Datenkommunikation (18) abgearbeitet wird (S15), oder
- das Bearbeiten der ersten Datenkommunikation (17) abgebrochen wird (S14), um die zweite Datenkommunikation (18) abzuarbeiten (S15); und wobei falls die Laufzeitabschätzung ergibt (S11), dass die erste Datenkommunikation (17) rechtzeitig beendet werden kann (T_{REST} << T_{RES}), die erste Datenkommunikation (17) für die Dauer einer Abbruchzeit (T_{STOP}) fortgesetzt wird (S13) und, sofern die erste Datenkommunikation (17) nach Ablauf der Abbruchzeit (T_{STOP}) noch nicht beendet ist, die erste Datenkommunikation (17) abgebrochen (S14) und die zweite Datenkommunikation (18) vollständig abgearbeitet wird (S15).

2. Verfahren nach Anspruch 1, **dadurch gekennzeichnet, dass** das Ergebnis der Laufzeitabschätzung (S11) bestimmt, ob die erste Datenkommunikation (17) abgebrochen (S14) oder fortgesetzt (S13) wird und wie lange die erste Datenkommunikation (17) gegebenenfalls fortgesetzt wird (S13), bevor die zweite Datenkommunikation (18) abgearbeitet wird (S15).

3. Verfahren nach Anspruch 1 oder 2, **dadurch gekennzeichnet, dass** bei der Laufzeitabschätzung eine zu erwartende Restlaufzeit (T_{REST}) der ersten Datenkommunikation (17) ausgewertet wird (S8).

4. Verfahren nach Anspruch 3, **dadurch gekennzeichnet, dass** die zu erwartende Restlaufzeit (T_{REST}) der ersten Datenkommunikation (17) anhand einer vorbestimmten zu erwartenden Gesamtlaufzeit (T_{MEAN}) der ersten Datenkommunikation (17) bestimmt wird (S7).

5. Verfahren nach Anspruch 3 oder 4, **dadurch gekennzeichnet, dass** die zu erwartende Restlaufzeit (T_{REST}) der ersten Datenkommunikation (17) mit Hilfe einer für die erste Datenkommunikation (17) erfassten Laufzeit (T_{RUN}) bestimmt wird (S7).

6. Verfahren nach einem der Ansprüche 3 bis 5, **dadurch gekennzeichnet, dass** die Restlaufzeit (T_{REST}) der ersten Datenkommunikation (17) in Abhängigkeit von zumindest einem mit der ersten Datenkommunikation (17) in Zusammenhang stehenden Kommando oder in Abhängigkeit von einer durch die erste Datenkommunikation (17) realisierten Anwendung bestimmt wird (S7).

7. Verfahren nach einem der Ansprüche 1 bis 6, **dadurch gekennzeichnet, dass** bei der Laufzeitabschätzung eine in dem Datenträger (1) gespeicherte, maximale Antwortzeit (T_{RES}) für die zweite Datenkommunikation (18) auswertet wird (S11).

8. Verfahren nach Anspruch 7, **dadurch gekennzeichnet, dass** die maximale Antwortzeit (T_{RES}) für die zweite Datenkommunikation (18) in Abhängigkeit von zumindest einem mit der zweiten Datenkommunikation (18) in Zusammenhang stehenden Kommando (19) oder in Abhängigkeit von einer durch die zweite Datenkommunikation (18) realisierten Anwendung bestimmt wird.

9. Verfahren nach einem der Ansprüche 1 bis 8, **dadurch gekennzeichnet, dass** die Daten der zweiten Datenkommunikation (18) ein Anfragekommando (19) repräsentieren, wobei das Anfragekommando (19) zumindest soweit empfangen wird (S3), dass das Anfragekommando (19) einem Kommandotyp zugeordnet werden kann (S4).

10. Verfahren nach einem der Ansprüche 1 bis 9, **dadurch gekennzeichnet, dass** die erste und zweite Datenkommunikation (17,18) von einem Mono-tasking-Betriebssystem durch auf einem Prozessor (7) des Datenträgers (1) ausführbare, nicht-nebenläufige Bearbeitungsprozesse bearbeitet werden.

11. Portabler Datenträger (1), umfassend einen Prozessor (7), eine erste Schnittstelle (4), eine zweite Schnittstelle (2) und eine Prüfeinrichtung (6), wobei die Prüfeinrichtung eingerichtet ist,
eine Ausführungspriorität für eine von dem Prozessor (7) bearbeitete - über die erste Schnittstelle (4) erfolgende - erste Datenkommunikation (17) und eine zweite Datenkommunikation (18) zu prüfen, zu der Daten über die zweite Schnittstelle (2) empfangen werden während die erste Datenkommunikation bearbeitet wird, und
die Bearbeitung der ersten Datenkommunikation (17) fortzusetzen, falls die erste Datenkommunikation (17) die höhere Ausführungspriorität besitzt, wobei die Prüfeinrichtung (6) eingerichtet ist, eine Laufzeitabschätzung durchzuführen, falls die zweite Datenkommunikation (18) die höhere Ausführungspriorität besitzt, und die Bearbeitung durch den Prozessor (7) so zu steuern, dass abhängig von dem Ergebnis der Laufzeitabschätzung, entweder
- die Bearbeitung der ersten Datenkommunikation (17) fortgesetzt wird, bevor die zweite Datenkommunikation (18) bearbeitet wird, oder
- die Bearbeitung der ersten Datenkommunikation (17) abgebrochen wird, um die zweite Datenkommunikation (18) abzuarbeiten;
wobei falls die Laufzeitabschätzung ergibt (S11), dass die erste Datenkommunikation (17) rechtzeitig beendet werden kann (T_{RFST} << T_{RES}), die erste Datenkommunikation (17) für die Dauer einer Abbruchzeit (T_{STOP}) fortgesetzt wird (S13) und, sofern die erste Datenkommunikation (17) nach Ablauf der Abbruchzeit (T_{STOP}) noch nicht beendet ist, die erste Datenkommunikation (17) abgebrochen (S14) und die zweite Datenkommunikation (18) vollständig abgearbeitet wird (S15).

12. Datenträger (1) nach Anspruch 11, **dadurch gekennzeichnet, dass** der Datenträger eingerichtet ist, ein Verfahren nach einem der Ansprüche 2 bis 10 durchzuführen.

## Claims

1. A method in a portable data carrier (1) having a first interface (4) and a second interface (2), comprising the steps of:
- processing (S1) a first data communication (17) that takes place via the first interface (4);
- receiving (S3) data of a second data communication (18) via the second interface (2), wherein the step of receiving (S3) data of the second data communication (18) takes place concurrently with the step of processing (S1) the first data communication (17);
- checking (S6) an execution priority for the first and second data communication (17, 18), wherein the processing of the first data communication (17) is continued (S8) if the first data communication (17) has the higher execution priority;
wherein a run time estimation (S11) is carried out if the second data communication (18) has the higher execution priority, and, in dependence on the run time estimation (S10), either
- the processing of the first data communication (17) is continued (S13) before the second data communication (18) is handled (S15), or
- the processing of the first data communication (17) is aborted (S14) in order to handle (S15) the second data communication (18); and wherein, if the run time estimation yields (S11) that the first data communication (17) can be concluded in time (T_{REST}<< T_{RES}), the first data communication (17) is continued for the duration of an abort time (T_{STOP}), and, insofar as the first data communication (17) has not been concluded after the expiration of the abort time (T_{STOP}), the first data communication (17) is aborted (S14) and the second data communication (18) is handled completely (S15).

2. The method according to claim 1, **characterized in that** the result of the run time estimation (S11) determines whether the first data communication (17) is aborted (S14) or continued (S13) and for how long the first data communication (17) is continued (S13), if applicable, before the second data communication (18) is handled (S15).

3. The method according to claim 1 or 2, **characterized in that** upon the run time estimation an expected remaining run time (T_{REST}) of the first data communication (17) is evaluated (S8).

4. The method according to claim 3, **characterized in that** the expected remaining run time (T_{REST}) of the first data communication (17) is determined (S7) on the basis of a predetermined expected total run time (T_{MEAN}) of the first data communication (17).

5. The method according to claim 3 or 4, **characterized in that** the expected remaining run time (T_{REST}) of the first data communication (17) is determined (S7) with the aid of a run time (T_{RUN}) captured for the first data communication (17).

6. The method according to any of the claims 3 to 5, **characterized in that** the remaining run time (T_{REST}) of the first data communication (17) is determined (S7) in dependence on at least one command related to the first data communication (17) or in dependence on an application realized through the first data communication (17).

7. The method according to any of the claims 1 to 6, **characterized in that** upon the run time estimation there is evaluated for the second data communication (18) a maximum response time (T_{RES}) stored in the data carrier (1).

8. The method according to claim 7, **characterized in that** the maximum response time (T_{RES}) for the second data communication (18) is determined in dependence on at least one command (19) related to the second data communication (18) or in dependence on an application realized through the second data communication (18).

9. The method according to any of the claims 1 to 8, **characterized in that** the data of the second data communication (18) represent a request command (19), wherein the request command (19) is received (S3) at least to such an extent that the request command (19) can be associated (S4) with a command type.

10. The method according to any of the claims 1 to 9, **characterized in that** the first and second data communication (17, 18) are processed through non-concurrent processing processes executable by a mono-tasking operating system on a processor (7) of the data carrier (1).

11. A portable data carrier (1) comprising a processor (7), a first interface (4), a second interface (2) and a checking device (6), wherein the checking device is adapted to check an execution priority for a first data communication (17) processed by the processor (7) and taking place via the first interface (4), and a second data communication (18), for which data are received via the second interface (2) while the first data communication is being processed, and
continue the processing of the first data communication (17) if the first data communication (17) has the higher execution priority, wherein the checking device (6) is adapted to carry out a run time estimation if the second data communication (18) has the higher execution priority, and to control the processing through the processor (7) such that, in dependence on the result of the run time estimation, either
- the processing of the first data communication (17) is continued before the second data communication (18) is processed, or
- the processing of the first data communication (17) is aborted in order to handle the second data communication (18);
wherein, if the run time estimation yields (S11) that the first data communication (17) can be concluded in time (T_{REST} << T_{RES}), the first data communication (17) is continued (S13) for the duration of an abort time (T_{STOP}) and, insofar as the first data communication (17) has not been concluded after the expiration of the abort time (T_{STOP}), the first data communication (17) is aborted (S14) and the second data communication is handled completely (S 15).

12. The data carrier (1) according to claim 11, **characterized in that** the data carrier is adapted to carry out a method according to any of the claims 2 to 10.

## Revendications

1. Procédé dans un support de données portable (1) comportant une première interface (4) et une seconde interface (2), comprenant les étapes:
- traitement (S1) d'une première communication de données (17) qui a lieu par l'intermédiaire de la première interface (4);
- réception (S3) de données d'une seconde communication de données (18) par l'intermédiaire de la seconde interface (2), l'étape de la réception (S3) de données de la seconde communication de données (18) ayant lieu en même temps que l'étape du traitement (S1) de la première communication de données (17);
- examen (S6) d'une priorité d'exécution pour la première et la seconde communication de données (17, 18), le traitement de la première communication de données (17) étant poursuivi (S8) dans le cas où la première communication de données (17) a la priorité majeure d'exécution;
une estimation du temps d'exécution (S11) étant effectuée dans le cas où la seconde communication de données (18) possède la priorité majeure d'exécution, et, en fonction de l'estimation du temps d'exécution (S10), soit
- le traitement de la première communication de données (17) est poursuivi (S13) avant que la seconde communication de données (S18) soit accomplie (S15), ou
- le traitement de la première communication de données (17) est interrompu (S14) afin d'accomplir (S15) la seconde communication de données (18); et, dans le cas où l'estimation du temps d'exécution révèle (S11) que la première communication de données (17) peut être achevée à temps (T_{REST} << T_{RES}), la première communication de données (17) étant poursuivie (S13) pour la durée d'un temps d'interruption (T_{STOP}) et, dans la mesure où la première communication de données (17) n'est pas encore achevée après écoulement du temps d'interruption (T_{STOP}), la première communication de données (17) étant interrompue (S14) et la seconde communication de données (18) étant entièrement accomplie (S15).

2. Procédé selon la revendication 1, **caractérisé en ce que** le résultat l'estimation du temps d'exécution (S11) détermine si la première communication de données (17) est interrompue (S14) ou poursuivie (S13) et combien de temps la première communication de données (17) est poursuivie (S13) le cas échéant avant que la seconde communication de données (18) soit accomplie (S15).

3. Procédé selon la revendication 1 ou 2, **caractérisé en ce que**, lors de l'estimation du temps d'exécution, un temps restant d'exécution (T_{REST}) escompté de la première communication de données (17) est analysé (S8).

4. Procédé selon la revendication 3, **caractérisé en ce que** le temps restant d'exécution (T_{REST}) escompté de la première communication de données (17) est déterminé (S7) au moyen d'un temps total d'exécution (TMEAN) escompté prédéterminé de la première communication de données (17).

5. Procédé selon la revendication 3 ou 4, **caractérisé en ce que** le temps restant d'exécution (T_{REST}) escompté de la première communication de données (17) est déterminé (S7) à l'aide d'un temps d'exécution (T_{RUN}) relevé pour la première communication de données (17).

6. Procédé selon une des revendications de 3 à 5, **caractérisé en ce que** le temps restant d'exécution (T_{REST}) de la première communication de données (17) est déterminé (S7) en fonction d'au moins une commande se trouvant en relation avec la première communication de données (17) ou en fonction d'une application réalisée par la première communication de données (17).

7. Procédé selon une des revendications de 1 à 6, **caractérisé en ce que**, lors de l'estimation du temps d'exécution, un temps de réponse maximal (T_{RES}) mémorisé dans le support de données (1) est analysé (S11) pour la seconde communication de données (18).

8. Procédé selon la revendication 7, **caractérisé en ce que** le temps de réponse maximal (T_{RES}) pour la seconde communication de données (18) est déterminé en fonction d'au moins une commande (19) se trouvant en relation avec la seconde communication de données (18) ou en fonction d'une application réalisée par la seconde communication de données (18).

9. Procédé selon une des revendications de 1 à 8, **caractérisé en ce que** les données de la seconde communication de données (18) représentent une commande d'interrogation (19), la commande d'interrogation (19) étant reçue (S3) au moins dans une telle mesure que la commande d'interrogation (19) peut être associée (S4) à un type de commande.

10. Procédé selon une des revendications de 1 à 9, **caractérisé en ce que** la première et la seconde communication de données (17, 18) sont traitées par un système d'exploitation mono-tâche moyennant des processus de traitement non concurrents exécutables sur un processeur (7) du support de données (1).

11. Support de données portable (1) comprenant un processeur (7), une première interface (4), une seconde interface (2) et un dispositif d'examen (6), le dispositif d'examen étant configuré pour examiner une priorité d'exécution pour une première communication de données (17) - ayant lieu par l'intermédiaire de la première interface (4) - traitée par le processeur (7) et une seconde communication de données (18) pour laquelle des données sont reçues par l'intermédiaire de la seconde interface (2) pendant que la première communication de données est traitée, et
poursuivre le traitement de la première communication de données (17) dans le cas où la première communication de données (17) possède la priorité majeure d'exécution, le dispositif d'examen (6) étant configuré pour effectuer une estimation du temps d'exécution dans le cas où la seconde communication de données (18) possède la priorité majeure d'exécution, et pour conduire de telle façon le traitement par le processeur (7) que, en fonction du résultat de l'estimation du temps d'exécution, soit
- le traitement de la première communication de données (17) est poursuivi avant que la seconde communication de données (18) soit traitée, ou
- le traitement de la première communication de données (17) est interrompu afin d'accomplir la seconde communication de données (18);
la première communication de données (17) étant, dans le cas où l'estimation du temps d'exécution révèle (S11) que la première communication de données (17) peut être achevée à temps (T_{REST} << T_{RES}), poursuivie (S13) pour la durée d'un temps d'interruption (T_{STOP}) et, dans la mesure où la première communication de données (17) n'est pas encore achevée après écoulement du temps d'interruption (T_{STOP}), la première communication de données (17) étant interrompue (S14) et la seconde communication de données (18) étant entièrement accomplie (S15).

12. Support de données (1) selon la revendication 11, **caractérisé en ce que** le support de données est configuré pour effectuer un processus selon une des revendications de 2 à 10.
